# EUROPEAN PATENT SPECIFICATION

(11) **EP 3 108 163 B1**
(45) Date of publication and mention of the grant of the patent: **10.10.2018**
(21) Application number: 15705489.1
(22) Date of filing: 16.02.2015
(51) Int. Cl.: E03F 7/06, E05D 5/02, E05D 5/08, F16K 15/03, E03F 7/04

(54) **FLAP GATE**
KLAPPE
VANNE A CLAPET OSCILLANT

(30) Priority: 18.02.2014 DK 201470081
(43) Date of publication of application: 28.12.2016
(73) Proprietor: Dannozzle Holding New ApS, 9530 Støvring (DK)
(72) Inventor: ERIKSEN, Jan, DK-9000 Aalborg (DK)
(74) Representative: Tellefsen, Jens J.
(86) International application number: PCT/DK2015/050033
(87) International publication number: WO 2015/124158

(56) References cited:
- EP-A1- 2 592 316
- WO-A1-2013/093387
- DE-U1-202010 011 871
- US-A- 420 001
- US-A- 994 347

## Description

### Field of the invention

The invention relates to the technical field of flap gates, particularly to flap gates for opening and closing the discharge end of pipes.

### Background of the invention

Flap gates may be designed to provide a closure on the discharge end of pipes to prevent drainage systems from flooding as well as to keep small animals from entering any pipe system. Farmers, land developers, the mining industry and municipalities normally use flap gates to control surface waters by enabling the management of water flow in a variety of situations. Basically, a differential pressure between the rear and the front of the flap gate causes the flap gate to automatically open and close, thus allowing discharge through levees/sewer lines/drainage conduits/etc. and, at the same time, preventing backflow.

In EP 2 592 316 is disclosed a clack valve used in an aircrafts' fuel system, which is used in order to control the flow of fuel between different compartments within the fuel system. The clack valve comprises a valve seat having an opening, and a lid construction comprising integrally formed shaft and lid plate. The shaft can rotate within a recess provided in the valve seat, in order to enable the lid to rotate from a closed position where the lid covers the opening to an open position where the lid lifts away from the valve seat.

Traditionally flap gates are made from steel, either as cast iron (black iron) or stainless steel. These materials are relatively heavy, and not very flexible. If exposed to substantial forces, which may occur during extreme weather conditions, the cast iron constructions are prone to crack and the stainless steel constructions may bend or otherwise be deflected from their original design. Making such constructions stronger also makes them heavier. This fact causes new problems in addition to the additional costs by using more material. Firstly installation may be difficult and more costly, involving lifting equipment not always available or possible to bring into position where the flap gate is to be installed. Secondly, in order for the valve to open the water-pressure from the pipe and outwards it has to be able to overcome the pressure on the other side of the valve and the gravitational force acting on the valve itself. Consequently the heavier the valve (due to more material) the more pressure is needed in the discharge pipe in order to open the flap gate.

Current flap gates are easily worn out, thereby becoming ineffective, due to the weather conditions and the fluids that the flap gate comes into contact with. The flap gates are exposed to splashes and pushes on the other side of the flap gate, for example if rain water from the houses to be discharged through the one side of the flap gate into the ocean and salt water from the ocean's waves and currents influences the gate in a non-even or harmonic manner. The discharge pipe can be partially or completely under water. In this manner the flap gates are exposed to pushing and pulling, twisting and bending from many angles and at varying force, often at the same time.

Hence, there is a need in the technical field of flap gates of overcoming the abovementioned drawbacks of the state-of-the-art.

### Aspects of the invention

The first aspect of the invention is to provide an improvement to the state-of-the-art. The second aspect of the invention is to solve the abovementioned drawbacks of the state-of-the-art by providing a flap gate that has a much longer lifetime and guarantees many more years of trouble-free service, and keeps functioning effectively even under extreme weather conditions and continue to be resistant to the fluids that the flap gate comes into contact with. The third aspect of the invention is to provide a flap gate that is extremely resistant and, at the same time, is flexible and lighter than current flap gates. In a fourth aspect of the invention the noise created by the prior art devices of this type is substantially reduced.

### Description of the invention

The above mentioned aspects of the invention are achieved by a flap gate comprising a plate shaped to match and cover an opening, e.g. a circular, a square or a rectangular opening, of a pipe (e.g. a corrugated or a smooth pipe), wherein said plate comprises composite material including up to 70% of glass and has a thickness of about 4 mm or more. The plate can be made from the waste material regenerated from wind turbine blades pressed together, such as Recycled Epoxy Fiberglass.

The invention has the advantage of providing a flap gate that has a much longer lifetime, longer than the typical 5-20 years, depending on the location, of the existing solutions, and can guarantee many more years of trouble-free service, and keep functioning effectively even under extreme weather conditions and disregarding the fluids that the flap gate comes into contact with, such as when used in sewage systems. Also, the invention has the advantage of providing a flap gate that is extremely resistant and at the same time flexible and lighter than current flap gates. Hence, contrary to current flap gates, which are very heavy and need cranes to be installed, the flap gate of the invention is very light and can be installed manually. Also the low weight does not require a substantial outflow from the discharge pipe in order to open the flap gate, and in this manner ensure effective discharge.

The glass-fibre reinforced material from which the plate is made is very resilient and relatively flexible, such that the plate may be exposed to severe wave action, twisting and high impact without causing damage to the plate. Furthermore the material does not bend out of shape, as is the case with steel products. When exposed to bending forces/stresses the plate flexes back into its original shape, once the forces/stresses disappears.

In an advantageous embodiment of the invention, said flap gate comprises a suspension arrangement for the plate, the suspension arrangement including a rod, a coupling assembly for coupling the plate to a distal portion of the rod, a mounting and pivoting assembly for mounting the flap gate to a support structure and for pivoting the plate in order to open and close on the discharge end of a pipe, which mounting and pivoting assembly is connected to a proximal portion of the rod. This embodiment has the advantage of providing a mechanism for opening/closing the flap gate according to the differential pressure exerted between the front side and the back side of the plate. By furthermore not having the suspension arrangement integrated in the plate additional advantages are obtained. As it is not desirable that the suspension arrangement flexes or twists, the arrangement may advantageously be made from a different material. The suspension arrangement shall be operative irrespectively of the weather conditions, and shall not be prone to jam when exposed to sideways motion, wave-action and the like. Particularly stainless steel is preferred, as this material is strong, stiff and resistant against saltwater and most chemicals.

In an embodiment of the invention, said coupling assembly comprises at least one bracket, wherein the bracket has a hole for accommodating a section of the distal portion of the rod, and one or more fasteners for fastening the bracket to the plate. This embodiment has the advantage of providing a substantial increase in strength, both in the rod and in the coupling assembly. Also, it enables an easier and more accurate installation of the flap gate.

In an embodiment of the invention, said mounting and pivoting assembly comprises a mounting element adapted to be fixed to the support structure and a pivoting element adapted to be pivoted with respect to the mounting element in a plane perpendicular to a plane comprising the opening. This embodiment has the advantage of providing a solution for mounting the flap gate to a support structure, e.g. a wall such as new concrete headwall or an existing wall, and for opening/closing on to the discharge end of the pipe.

In an embodiment of the invention, all metallic members of the flap gate except the rod and any axles and screws are water-cut. Normally, the elements of a flap gate are made in acid-proof stainless steel and are cast, milled, sawed, drilled or welded. However, due to the fluids with which the flap gate comes into contact, e.g. salt water combined with sewage, these elements are too easily worn out. This embodiment has the advantage that no material properties are changed, i.e. no material changes due to processing, no shape change and no chemical change in the material (e.g. acid-proof stainless steel) is induced into the material during processing of the material. Thus in effect the abovementioned elements of the flap gate are able to resist even under extreme conditions.

In the prior art rubber, e.g. neoprene rubber, has been used on the back side of the plate, i.e. the side facing the opening of the pipe, along the perimeter of the plate to avoid the plate slamming against the opening of the pipe, which produces noise propagated through the pipe system back to the houses. However, due to the fluids that the flap gate comes into contact with, such as salt water combined with sewage, the rubber is easily worn out both mechanically and chemically due to degradation from sunlight, saltwater and other aggressive fluids. In an embodiment of the invention, said flap gate further comprises a rope or cord adapted to be attached to a back side of the plate along the perimeter of the plate, wherein the rope or cord is made of a large number of glass-filaments arranged inside a flexible and permeable sleeve. This embodiment has the advantage that the rope of the invention has a much longer service life than the rubber, in that basically glass is resistant to salt water and many of the aggressive fluids to which it will be exposed in the environments where flap gates are used. Furthermore the flexible nature of the rope made with a large number of glass-filaments arranged inside a sleeve provides tightness to the structure. Also, when a fluid comes into contact with the rope, the permeable characteristics of the sleeve allows water to enter into the filaments, swelling the rope. The filaments acts with sponge-like characteristics, such that water will be retained between the filaments whereby the swelling rope functions like a cushion, thus working as a shock absorber (the permeable nature of the sleeve allows water in and out of the rope) and ensuring noise reduction.

In a still further advantageous embodiment of the invention, said rope is glued to the back side of the plate with a marine and technical glue, such as a glue used in the car industry. This embodiment has the advantage that the rope is firmly and long-lastingly attached to the plate, and that there are no mechanical connections which could otherwise give rise to abrasion and wear.

In a further advantageous embodiment of the invention, the plate is shaped such that when the flap gate is in operation a passageway is created between a lower end of the plate and the opening of the pipe, for example provided by a cut-out at the rim of the plate at a position facing away from the pivoting and mounting assembly. This embodiment is only used where there is a special need and has the advantage that in case sand or other debris settles on the lower end of the plate due to the ocean's waves and current, the flap gate can still open when fluids have to be discharged from the pipe.

In order to accommodate very large flap gates or plates with non-circular shape using standard elements of the flap gate according to the invention, the plate can be suspended by two or more suspension arrangements arranged side by side with rods arranged in parallel.

Further advantageous embodiments of the invention include embodiments where a plate land is provided, said land adapted to be mounted on the end of a discharge pipe in use, where said land has two openings corresponding in shape to the discharge pipe opening and the plate, and where the planes of the two openings are not parallel, optionally arranged at a mutual angle α between 3° and 25°, and where means for fastening the mounting and pivoting assembly for mounting the flap gate to said land is provided. By mounting a land, it is ensured that the force of gravity will help keep the gate closed when there is no pressure from the liquids to be discharged. Due to the lightweight construction of the plate, the land also helps to avoid that the action from for example wind and waves will open the gates unnecessarily, causing both extra wear and noise.

Further, the thickness of the plate is between 4 mm and 50 mm, more preferred 5 mm to 35 mm, and most preferred 10 mm to 30 mm, where when the plate is substantially circular the diameter of the plate is between 50 mm and 3000 mm, more preferred 300 mm to 2000 mm. The condition "when the plate is substantially circular" shall be understood such that traditionally the discharge pipes have a circular cross section, but the plate may for design reasons have an oval or tear-drop shape. The "effective plate" will be the part of the plate covering/closing off the discharge pipe, and hence traditionally circular.

The plate material further includes carbon fibre reinforcement. The carbon reinforcement provides exceptional strength characteristics, and does easily integrate in the resin matrix. By providing dedicated carbon reinforcement the plate, and in particular the larger plates, may be designed having a very high stiffness and bending resistance. This is achieved without increasing the overall weight of the plate.

Hereafter, the invention will be described in connection with drawings illustrating non-limiting examples of a flap gate.

### Brief description of the drawings

FIG.1: A wall-mounted flap gate.
FIG.2: Close-up of a coupling assembly.
FIG.3: A mounting and pivoting assembly.
FIG.4: A gasket mounted on the rim on a flap gate. Shown with tape to protect ends of rope.
FIG.5: A weight shown mounted on a flap gate.
FIG.6: An embodiment of a flap gate with at cutout in the flap.
FIG.7: An embodiment of a suspension for a large flap gate.
FIG. 8: illustrates a side view of a land.

### Preferred embodiments of the invention

Below a very detailed embodiment of the invention will be described. It is naturally possible to embody the invention in a host of other embodiments within the inventive principles of the invention as specified in the claims.

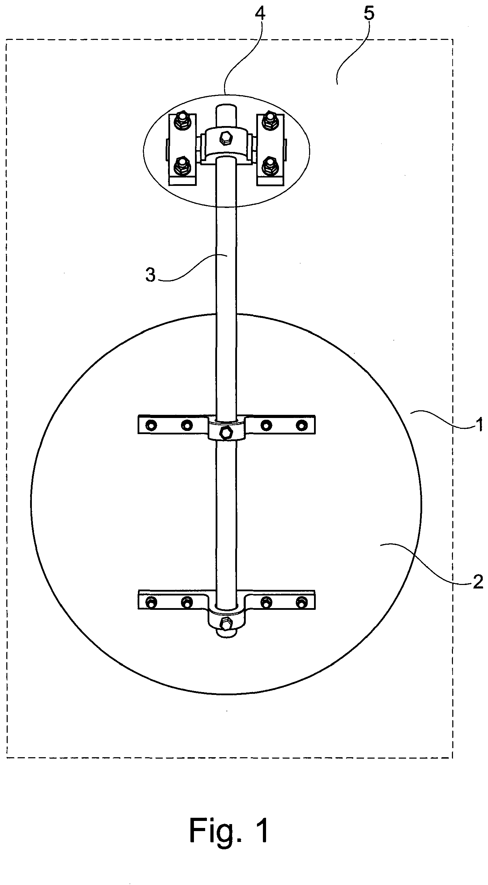

FIG.1 shows a wall-mounted flap gate 1 for opening (up to 180 degrees) and closing on the discharge end of a pipe (covered by the plate 2). The flap gate 1 comprises a plate 2 shaped to match a circular opening of the pipe. The diameter of the opening may range between Ø 60 and Ø 1300. The plate 2 comprises composite material including up to 70% of glass and has a thickness of at least 10 mm.

The properties of the composite materials can be as follows:
Temperature range: -30°C to +80°C.
Corrosion-, rot- and mildew-resistant. Resisance to diluted acids and bases (alkalis). Weight per m² (kg) at 10 mm thickness: 17.
E-modulus (MPa): 15400.
Impact strength (N/mm²): 364.

### Comparison of materials:

| Material | Tensile strength / Yield strength | Density | Strength compared to weight |
|---|---|---|---|
| Steel | 235 | 7800 | 235/7800 = 0,03 |
| Recycled Epoxy Fiberglass | 350 | 1700 | 350/1700 = 0,21 |

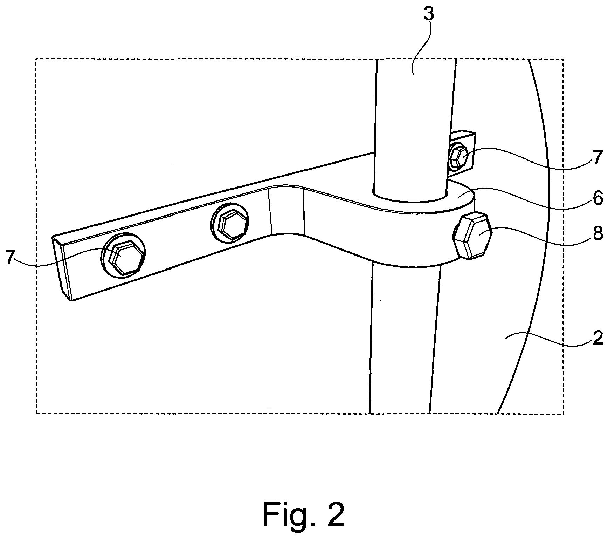

The flap gate 1 further comprises a rod 3, a coupling assembly (see FIG.2) for coupling the plate 2 to a distal portion of the rod 3. A mounting and pivoting assembly 4 for mounting the flap gate 1 to a support structure 5 (see FIG.1) and for pivoting the plate 2 in order to open and close the pipe at the discharge end of a not shown pipe, which mounting and pivoting assembly 4 is connected to a proximal portion of the rod 3. The rod is preferably tubular or a section of pipe.

FIG.2 shows a close-up of a coupling assembly. The coupling assembly comprises a bracket 6, which has a hole for accommodating a section of the distal portion of the rod 3, and a plurality of bolts 7, 8 for fastening the bracket 6 to the plate 2 (four M10x40 bolts 7 with four M10 lock nuts, which are placed on the back side of the plate 2, and eight M10x25 washers, four of which are placed on the back side of the plate 2) and for fastening the bracket 6 to the rod 3. One M16x60 bolt 8 going through the rod 3. The width of the bracket 6 may be adjusted to match the strength and the rigidity to be obtained. The bracket 6 is made from stainless steel, typically in a quality corresponding to AISI 3 161 or better.

As illustrated in fig 1 two brackets 6 including fastening means are provided in the flap gate 1 construction. This is done in order to provide stability, and in order to distribute the transfer of forces from the plate 2 to the rod 3 and the pivoting assembly 4.

The coupling assembly can be modified in case there is a need for an angle between the rod 3 and the plate 2. In that case spacers (not shown) can be mounted between one of the two brackets 6 holding the plate 2. The spacers can be dimensioned such that the rod 3 and the plate 2 are not in parallel as seen from the side of the plate 2 but have a mutual angle up to 15°. In that way the position of the plate can be modified so as to accommodate for a slanting end or mouth of a discharge pipe at which the flap gate is mounted.

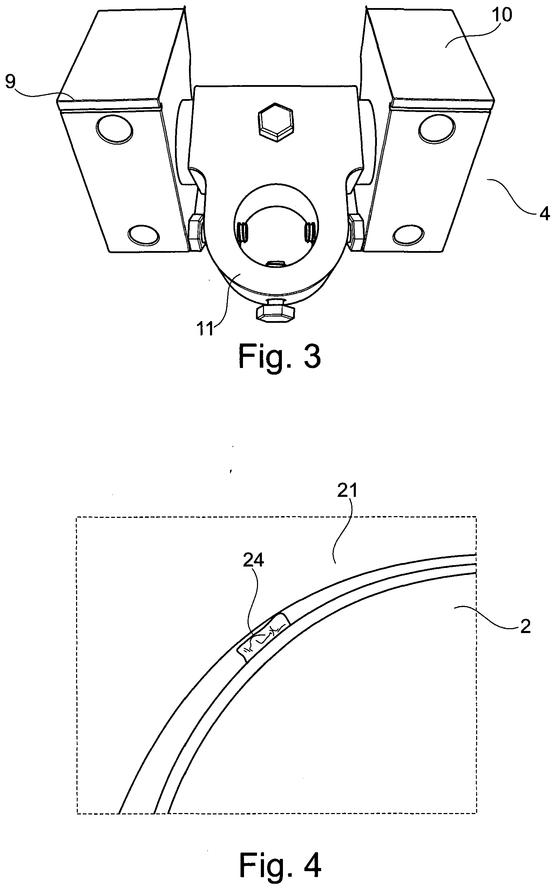

FIG.3 shows a detail of the mounting and pivoting assembly 4. The mounting and pivoting assembly 4 comprises two mounting elements 9,10 adapted to be fixed to a support structure such as a wall in FIG.1 by means of bolts and a pivoting element 11 adapted to be pivoted with respect to the mounting elements 9,10 in a plane perpendicular to a plane comprising the opening. An axle 12 connects the two mounting elements 9,10 and permits the pivoting element 11 to rotate up to 180 degrees.

In order to diminish wear and ensure proper workings between the different parts of the flap gate suitable washers, bushings etc. are provided. In one example a slide bush is provided which prevents failure caused by contamination and is shaped with a collar that prevents the slide bush from sliding through the mounting element. The slide bushing is typically made from materials such as POM and PEEK, and combinations thereof. POM is a semi-crystalline material, which is hard, strong and has a high rigidity. It does not absorb moisture, thus it has more dimensional stability than PA. Also, it has good wear and friction properties. Finally, it has a high operating temperature and it maintains its original shape even after prolonged mechanical stress. PEEK is a semi-crystalline material with a very high operating temperature and excellent mechanical properties, also in chemically aggressive environments.

In case there is no wall for mounting the flap gate 1, the mounting and pivoting element 4 may be still mounted on other support structures such as a horizontal base over the discharge end of the pipe by attaching each mounting element 9,10 to the vertical portion of an appropriate bracket (not illustrated). It should be noted that under other mounting conditions appropriate mounting brackets suitable for the purpose will be provided.

FIG. 4 shows part of the rim of the plate 2 fitted with a gasket 21 for a flap gate 1. The gasket 21 is in this embodiment braided from parallel incoming glass fiber yarns. In this manner a cross-section through a gasket will reveal a large number of glass fiber filaments. The glass fibers are arranged in a sleeve, which advantageously is both permeable and water-resistant. The sleeve material is furthermore adapted to be attached to a back side 20 of the plate 2 along and proximate the periphery of the plate 2. The gasket 20 is made of glass (e.g. C or C/E glass) contained in a sleeve and is glued to the back side 20 of the plate 2 with a suitable marine adhesive.. Advantageously, the gasket is wrapped in an anti-corrosion tape (e.g. 0.25mm thick) for use in wet and water-filled environments. The tape may be used in the ends only, or along the entire length of the gasket. The tape ensures that the ends of the gasket do not fray. The ends 24 of the gasket are taped individually before cutting and then taped together during assembly. The adhesive is applied to the plate member 2 in a width about 10 mm and a depth of 6 mm. The hardness after bonding is about 40 Shore A with a temperature resistance in the range -40°C to +90°C.

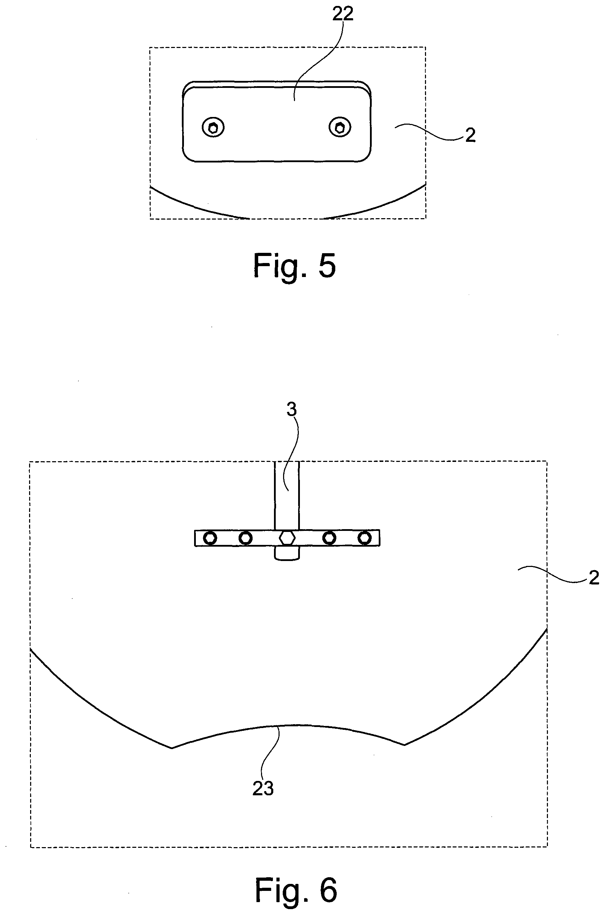

FIG. 5 shows a weight 22 for a flap gate 1. The weight 22 ensures that the flap gate 1 does not open unnecessarily and that it closes again. The weight 22 is made from materials such as stainless steel, typically in a quality corresponding to AISI 3 161 or better or natural stone, and combinations thereof. The provision of a weight is due to the lightweight construction of the flap gate using resin based glass-fiber materials, typically reworked from used wind turbine blades. In order to help keep the flap gate in its closed position, i.e. in contact with the rim of the discharge pipe, the weight will be balanced such that this is the case under normal conditions.

FIG. 6 shows a detail of an embodiment of the invention where the plate 2 is provided with a convex cutout 23 at a part of the periphery of the plate pointing away from the suspension arrangement including the rod 3. If any deposits such as sand or sludge accumulate at the bottom of the discharge end of a pipe at which the flap gate is mounted, the cutout will allow for such accumulation so that closure or opening of the gate is not impeded. This feature serves the purpose of letting the gate open if there is a buildup of foreign material in front of the pipe outlet. This is done at the expense of letting a small amount of the foreign material or sea water wash through the cut-out and into the discharge pipe.

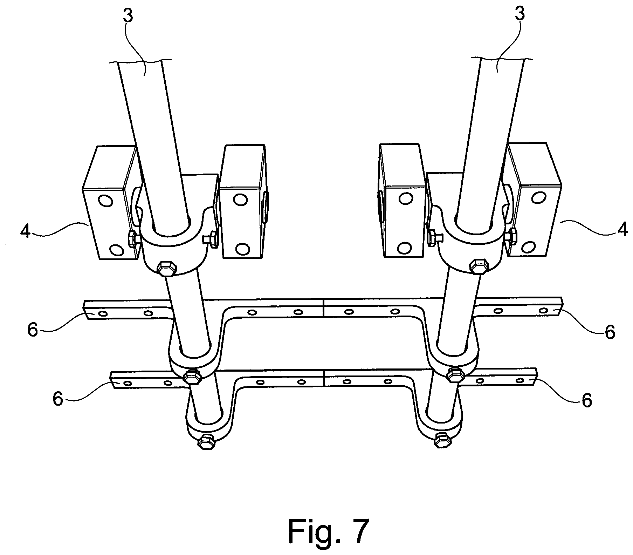

FIG. 7 shows a double mounting for a further embodiment of a flap gate according to the invention. In its simplest form this embodiment consists of two suspension arrangements provided side by side with two rods 3, two pivoting and mounting assemblies 4 and corresponding brackets 6 on the rods 3. Hereby it is possible to fit wider or larger plates (not shown here) for large pipe ends. Also, it is possible to provide a flap gate with a plate that is not circular, e.g. rectangular or oval, for pipes or ducts with these cross-sectional shapes. In this connection it is also possible to provide the brackets 6, which are shown as two pairs on FIG.12, as one-piece elements with double width for providing the full width, and optionally a single common axle for the two rods.

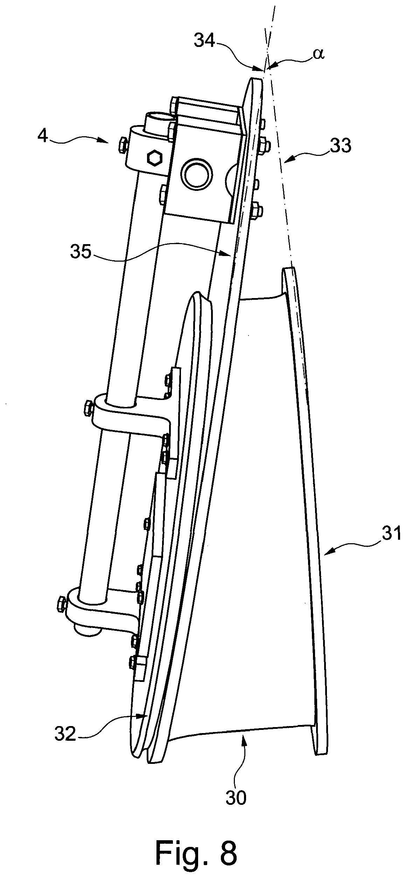

In fig. 8 is illustrated a land 30, suitable to be arranged at the discharge end of a pipe. The land 30 has two openings 31,32, where in this example one opening 32 is closed by the plate 2 of the flap gate. The planes 33,34 of the two openings are not parallel, but arranged at an angle α relative to each other. Typically the land will be oriented as indicated in fig. 8, whereby the angle α will cause the plate, due to gravitational forces, to be urged into the closed position as illustrated.

The angle α may vary according to circumstances. The land 30 may be manufactured from stainless steel or resin based materials.

The opening 32 is provided with an extension 35 such that the pivoting assembly 4 can be mounted on the land 30. Other means may also be provided for this or other purposes associated with the flap gate.

If the rain water shall flow out, the flap opens, otherwise it shuts for the sea water coming from outside. The flap gate shall ensure that there is no stream of water back into the houses, which would obviously lead to severe damages with high losses for insurance companies.

The flap gate according to the invention allows rapid production of the component parts, and the flap gate can be precisely and easily mounted and installed, particularly due to the low weight of the plate. These advantages are combined with greater strength and longer service life than the prior art flap gates.

The flap gate according to the invention generally allows for adaptation to the condition at the installation site, also regarding sand-flow or special dimensions of installation.

The flap gate according to the invention can be provided with not shown sensors for registering angle of tilt of the flap gate, indicating when the flap gate is open or closed, or even the degree of opening of the flap gate. Such sensors can be connected with a monitoring and/or control system for general control of a sewage or drainage system. This allows a supervisor to know both if the gate is not opening when it should and if it is not closing when it should. This indicates to the supervisor that there is an obstacle in the path of the gate. The sensor can send a message to either the supervisor's mobile phone or to a central monitoring unit, if the flap gate is prevented from movement under specific preset conditions. The sent message informs the supervisor of which gate is causing the alarm with either an address or GPS coordinates.

## Claims

1. A flap gate (1) for opening and closing on the discharge end of a pipe, said flap gate (1) comprising a plate (2) shaped to match an opening of the pipe, **characterised in that** said plate (2) comprises composite material including up to 70% of glass fibres and has a thickness of about 4 mm or more, and further that said flap gate (1) further comprises a suspension arrangement for the plate, the suspension arrangement including a rod (3), a coupling assembly for coupling the plate (2) to a distal portion of the rod (3), a mounting and pivoting assembly (4) for mounting the flap gate (1) to a support structure (5) and for pivoting the plate (2) in order to open and close on the discharge end of a pipe, which mounting and pivoting assembly (4) is connected to a proximal portion of the rod (3).

2. A flap gate (1) according to claim 1, **characterised in that** said coupling assembly comprises at least one bracket (6), wherein the bracket (6) has a hole for accommodating a section of the distal portion of the rod (3), and one or more fasteners (7,8) for fastening the bracket (6) to the plate (2).

3. A flap gate (1) according to any of the preceding claims, **characterised in that** said mounting and pivoting assembly (4) comprises a mounting element (9,10) adapted to be fixed to the support structure (5) and a pivoting element (11) adapted to be pivoted with respect to the mounting element (9,10) in a plane perpendicular to a plane comprising the opening.

4. A flap gate (1) according to any of claims 1 to 3, **characterised in that** all metallic members of the flap gate (1) except the rod (3) and any axles and screws are water-cut.

5. A flap gate (1) according to any of the preceding claims, **characterised in that** said flap gate (1) further comprises a gasket (20) adapted to be attached to a back side (21) of the plate (2) along the perimeter of the plate (2), wherein the gasket (20) is made of a large number of glass-filaments arranged inside a flexible and permeable sleeve.

6. A flap gate (1) according to claim 5, **characterised in that** said gasket (20) is glued to the back side (21) of the plate (2) with a marine and technical glue.

7. A flap gate (1) according to any of the preceding claims, **characterised in that** the plate (2) is shaped such that when the flap gate (1) is in operation, a passageway (23) is created between a lower end of the plate (2) and the opening of the pipe.

8. A flap gate (1) according to any of the preceding claims if combined with claim 2, **characterised in that** the plate (2), such as a very large plate or a plate with a non-circular shape, is suspended by two or more suspension arrangements arranged side by side with rods (3) arranged in parallel.

9. A flap gate according to any preceding claim where a plate land is provided, said land adapted to be mounted on the end of a discharge pipe in use, where said land has two openings corresponding in shape to the discharge pipe opening and the plate, and where the planes of the two openings are not parallel, optionally arranged at a mutual angel α between 3° and 25°, and where means for fastening the mounting and pivoting assembly (4) for mounting the flap gate (1) to said land is provided.

10. A flap gate according to any preceding claim wherein the thickness of the plate is between 4 mm and 50 mm, more preferred 5 mm to 35 mm, and most preferred 10 mm to 30 mm, and where when the plate is substantially circular the diameter of the plate is between 50 mm and 3000 mm, more preferred 300 mm to 2000 mm.

11. A flap gate according to claim 1, where the plate material further includes carbon fibre reinforcement.

## Patentansprüche

1. Klappe (1) zum Öffnen und Schließen des Auslassendes einer Leitung, wobei die Klappe (1) eine Platte (2) umfasst, die so geformt ist, dass sie zu einer Öffnung der Leitung passt, **dadurch gekennzeichnet, dass** die Platte (2) Verbundmaterial umfasst, das bis zu 70 % Glasfasern beinhaltet und eine Dicke von etwa 4 mm oder mehr hat, und ferner dadurch, dass die Klappe (1) ferner eine Aufhängungsanordnung für die Platte umfasst, wobei die Aufhängungsanordnung eine Stange (3), eine Kopplungsanordnung zum Koppeln der Platte (2) an einen distalen Abschnitt der Stange (3), eine Montage- und Schwenkvorrichtung (4) zum Montieren der Klappe (1) an einer Stützstruktur (5) und zum Schwenken der Platte (2) umfasst, um das Auslassende einer Leitung zu öffnen und zu schließen, wobei die Montage- und Schwenkvorrichtung (4) mit einem proximalen Abschnitt der Stange (3) verbunden ist.

2. Klappe (1) nach Anspruch 1, **dadurch gekennzeichnet, dass** die Kopplungsanordnung mindestens einen Halter (6) umfasst, wobei der Halter (6) ein Loch zum Aufnehmen eines Teils des distalen Abschnitts der Stange (3) und ein oder mehrere Befestigungselemente (7, 8) zum Befestigen des Halters (6) an der Platte (2) aufweist.

3. Klappe (1) nach einem der vorstehenden Ansprüche, **dadurch gekennzeichnet, dass** die Montage und Schwenkvorrichtung (4) ein Montageelement (9, 10) umfasst, das so gestaltet ist, dass es an der Stützstruktur (5) fixiert werden kann, und ein Schwenkelement (11), das so gestaltet ist, dass es in Bezug auf das Montageelement (9, 10) in einer Ebene senkrecht zu einer Ebene, die die Öffnung umfasst, geschwenkt werden kann.

4. Klappe (1) nach einem der Ansprüche 1 bis 3, **dadurch gekennzeichnet, dass** alle metallischen Elemente der Klappe (1) mit Ausnahme der Stange (3) und alle Achsen und Schrauben wasserstrahlgeschnitten sind.

5. Klappe (1) nach einem der vorstehenden Ansprüche, **dadurch gekennzeichnet, dass** die Klappe (1) ferner eine Dichtung (20) umfasst, die so gestaltet ist, dass sie an einer hinteren Seite (21) der Platte (2) entlang des Umfangs der Platte (2) angebracht werden kann, wobei die Dichtung (20) aus einer großen Anzahl von Glasfasern gefertigt ist, die innerhalb einer flexiblen und durchlässigen Hülse angeordnet sind.

6. Klappe (1) nach Anspruch 5, **dadurch gekennzeichnet, dass** die Dichtung (20) mit einem Klebstoff für Marine und Technik an die hintere Seite (21) der Platte (2) geklebt ist.

7. Klappe (1) nach einem der vorstehenden Ansprüche, **dadurch gekennzeichnet, dass** die Platte (2) so geformt ist, dass dann, wenn die Klappe (1) in Betrieb ist, zwischen einem unteren Ende der Platte (2) und der Öffnung der Leitung ein Durchgang (23) gebildet wird.

8. Klappe (1) nach einem der vorstehenden Ansprüche, wenn kombiniert mit Anspruch 2, **dadurch gekennzeichnet, dass** die Platte (2), zum Beispiel eine sehr große Platte oder eine Platte mit einer nicht runden Form, von zwei oder mehr Aufhängungsanordnungen aufgehängt ist, die nebeneinander mit parallel angeordneten Stangen (3) angeordnet sind.

9. Klappe nach einem der vorstehenden Ansprüche, wobei eine Plattenfläche bereitgestellt ist, wobei die Fläche so gestaltet ist, dass sie im Gebrauch an dem Ende einer Auslassleitung montiert werden kann, wobei die Fläche zwei Öffnungen aufweist, die in ihrer Form mit der Öffnung der Auslassleitung und der Platte korrespondieren, und wobei die Ebenen der zwei Öffnungen nicht parallel sind, optional angeordnet in einem gemeinsamen Winkel α zwischen 3° und 25°, und wobei ein Element zum Befestigen der Montage- und Schwenkanordnung (4) zum Montieren der Klappe (1) an der Fläche bereitgestellt ist.

10. Klappe nach einem der vorstehenden Ansprüche, wobei die Dicke der Platte zwischen 4 mm und 50 mm, vorzugsweise 5 mm bis 35 mm, und am stärksten bevorzugt 10 mm bis 30 mm beträgt, und wobei, wenn die Platte im Wesentlichen rund ist, der Durchmesser der Platte zwischen 50 mm und 3000 mm liegt, vorzugsweise 300 mm bis 2000 mm.

11. Klappe nach Anspruch 1, wobei das Plattenmaterial ferner eine Kartonfaserverstärkung beinhaltet.

## Revendications

1. Vanne à clapet oscillant (1) pour ouvrir et fermer à la sortie d'un tuyau, ladite vanne à clapet oscillant (1) comprenant une plaque (2) conformée pour s'assortir à l'ouverture du tuyau,
**caractérisée en ce que** ladite plaque (2) comprend un matériau composite incluant jusqu'à 70 % de fibres de verre et a une épaisseur d'environ 4 mm ou plus, et en outre
**en ce que** ladite vanne à clapet oscillant (1) comprend en outre un agencement de suspension pour la plaque, l'agencement de suspension comprenant une tige (3), un ensemble d'accouplement pour accoupler la plaque (2) à la partie distale de la tige (3), un ensemble (4) de montage et de pivotement pour monter la vanne à clapet oscillant (1) sur une structure de support (5) et pour faire pivoter la plaque (2) afin d'ouvrir et de fermer à la sortie d'un tuyau, lequel ensemble (4) de montage et de pivotement est raccordé à la partie proximale de la tige (3).

2. Vanne à clapet oscillant (1) selon la revendication 1, **caractérisée en ce que** ledit ensemble d'accouplement comprend au moins un support (6),
dans laquelle le support (6) comporte un trou pour accueillir une section de la partie distale de la tige (3) et une ou plusieurs pièces de fixation (7, 8) pour fixer le support (6) à la plaque (2).

3. Vanne à clapet oscillant (1) selon l'une quelconque des revendications précédentes, **caractérisée en ce que** ledit ensemble (4) de montage et de pivotement comprend un élément de montage (9, 10) apte à être fixé à structure de support (5) et un élément de pivotement (11) apte à être pivoté par rapport à l'élément de montage (9, 10) dans un plan perpendiculaire à un plan comprenant l'ouverture.

4. Vanne à clapet oscillant (1) selon l'une quelconque des revendications 1 à 3, **caractérisée en ce que** tous les éléments métalliques de la vanne à clapet oscillant (1), à l'exception de la tige (3) et de tous les axes et vis, sont découpés au jet d'eau.

5. Vanne à clapet oscillant (1) selon l'une quelconque des revendications précédentes, **caractérisée en ce que** ladite vanne à clapet oscillant (1) comprend en outre un joint (20) apte à être fixé au côté arrière (21) de la plaque (2) le long du périmètre de la plaque (2),
dans laquelle le joint (20) est fait d'un grand nombre de filaments de verre disposés à l'intérieur d'un manchon souple et perméable.

6. Vanne à clapet oscillant (1) selon la revendication 5, **caractérisée en ce que** ledit joint (20) est collé au côté arrière (21) de la plaque (2) avec de la colle marine et technique.

7. Vanne à clapet oscillant (1) selon l'une quelconque des revendications précédentes, **caractérisée en ce que** la plaque (2) est conformée de telle sorte que, quand la vanne à clapet oscillant (1) est en service, un passage (23) se crée entre l'extrémité inférieure de la plaque (2) et l'ouverture du tuyau.

8. Vanne à clapet oscillant (1) selon l'une quelconque des revendications précédentes si elle associée à la revendication 2, **caractérisée en ce que** la plaque (2), par exemple une très grande plaque ou une plaque ayant une forme non circulaire, est suspendue par deux ou plusieurs agencements de suspension disposés côte à côte avec des tiges (3) disposées en parallèle.

9. Vanne à clapet oscillant selon l'une quelconque des revendications précédentes, dans laquelle on utilise un appui de plaque, ledit appui étant apte à être monté à l'extrémité d'un tuyau de refoulement lors de l'utilisation,
dans laquelle ledit appui comporte deux ouvertures dont la forme correspond à l'ouverture du tuyau de refoulement et à la plaque,
dans laquelle les plans des deux ouvertures ne sont pas parallèles, mais éventuellement disposés en faisant l'un avec l'autre un angle α compris entre 3° et 25°, et
dans laquelle on fait appel à des moyens de fixation de l'ensemble (4) de montage et de pivotement pour monter la vanne à clapet oscillant (1) sur ledit appui.

10. Vanne à clapet oscillant selon l'une quelconque des revendications précédentes, dans laquelle l'épaisseur de la plaque est comprise entre 4 mm et 50 mm, de préférence de 5 mm à 35 mm, et idéalement de 10 mm à 30 mm, et
dans laquelle, quand la plaque est sensiblement circulaire, le diamètre de la plaque est compris entre 50 mm et 3000 mm, de préférence de 300 mm à 2000 mm.

11. Vanne à clapet oscillant selon la revendication 1, dans laquelle le matériau de la plaque comprend en outre un renfort de fibre de carbone.
